# EUROPÄISCHE PATENTSCHRIFT

(11) **EP 1 829 445 B1**
(45) Veröffentlichungstag und Bekanntmachung des Hinweises auf die Patenterteilung: **24.12.2008**
(21) Anmeldenummer: 06124428.1
(22) Anmeldetag: 21.11.2006
(51) Int. Cl.: A01F 15/07

(54) **Ballenpresse**
Baling press
Presse à empaqueter

(30) Priorität: 03.03.2006 DE 102006009863
(43) Veröffentlichungstag der Anmeldung: 05.09.2007
(73) Patentinhaber: Deere & Company, Moline, IL 61265-8098 (US)
(72) Erfinder: Viaud, Jean, 70100 Gray (FR); Chapon, Emmanuel, 70100 Velet (FR)
(74) Vertreter: Löser, Iris

(56) Entgegenhaltungen:
- EP-A- 1 527 674
- EP-A1- 0 931 449
- EP-B1- 0 503 046
- DE-U1-8202005 018 51

## Beschreibung

Die Erfindung betrifft eine Ballenpresse mit einem Pressraum sowie einer Vorrichtung zum Umhüllen eines Ballens mit einer Hüllbahn und mit wenigstens einem umlaufenden Förderelement.

Die EP-B1-0 503 046 zeigt eine Ballenpresse mit einer Ballenformungskammer, die durch mehrere Ballengurte bestimmt ist und eine Öffnung einschließt, durch die Erntematerial in die Kammer eintritt. Es sind Hüllmaterial-Zuführmittel mit einem Zuführwalzengehäuse zum Zuführen von Hüllmaterial von einer Zuführwalze zur Umhüllung des Ballens nach Bildung desselben vorsehen, wobei die Zuführmittel mit den Ballengurten zum Transportieren des Hüllmaterials zusammenwirken.

Die der Erfindung zugrunde liegende Aufgabe wird darin gesehen, eine derartige Ballenpresse mit einer Vorrichtung zum Umhüllen eines Ballens zu optimieren.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird eine Ballenpresse mit einem Pressraum sowie einer Vorrichtung zum Umhüllen eines Ballens mit einer Hüllbahn und mit wenigstens einem umlaufenden Förderelement gezeigt. Da das umlaufende Förderelement die Hüllbahn an den Ballen heranführt, werden keine weiteren Fördereinrichtungen benötigt. Da das Förderelement auch nicht mit Riemen oder anderen Pressmitteln zusammenwirkt, um an den Ballen herangebracht zu werden, sondern vielmehr die von dem Förderelement an den Ballen herangebrachte Hüllbahn direkt durch den Ballen ergriffen wird, wird eine besonders gleichmäßige Förderung der Hüllbahn erreicht und einem Verknäulen und damit einem schlechten Wickelergebnis entgegengewirkt. Der Pressraum ist zumindest im Bereich des Förderelements seitwärts im Wesentlichen geöffnet ausgebildet. Dies kann beispielsweise dadurch erzielt werden, dass Seitenwände, die den Pressraum seitwärts begrenzen in diesem Bereich zumindest im Wesentlichen geöffnet vorgesehen sind bzw. entsprechende Aussparungen aufweisen. Auf diese Weise ist das Förderelement bzw. sind die Rollen, die von dem Förderelement umschlungen sind, leicht zugänglich und können in einfacher Weise von Materialansammlungen oder Verunreinigungen befreit und gewartet werden.

Das Förderelement kann wenigstens einen umlaufenden Riemen aufweisen bzw. als ein solcher ausgebildet sein. Riemen sind Bauteile, welche an Ballenpressen häufig zum Einsatz kommen, kostengünstig und haltbar sind.

Ist das Förderelement einteilig ausgebildet bzw. wird das Förderelement durch einen einteiligen Riemen gebildet, so deckt das Förderelement den gesamten Zuführraum ab. Auf diese Weise wird einem Ansammeln von Material in dem Zuführbereich vorgebeugt, welches bei einer mehrteiligen Ausführung insbesondere im Bereich von Spalten/Zwischenräumen zwischen einzelnen Förderelementen bzw. Förderelementteilen und besonders in einem zentralen Bereich des Zuführbereichs auftreten kann. Sind mehrere Förderelemente bzw. Förderelementteile vorgesehen so kann es notwendig bzw. sinnvoll sein, für einzelne oder alle Förderelemente/Förderelementteile Leitmittel vorzusehen, welche einer Lageänderung bzw. einem Überkreuzen der Förderelemente/Förderelementteile entgegenwirken. Eine einteilige Ausführung weist den Vorteil auf, dass die Anzahl der Leitmittel reduziert werden kann bzw. auf solche vollständig verzichtet werden kann.

Die Oberfläche bzw. die Umfangsfläche des Förderelements kann glatt oder auch strukturiert vorgesehen sein, beispielsweise um einen Transport des Hüllmaterials in gewünschter Weise zu beeinflussen. Weist das Förderelement Vorsprünge auf, so kann dies den Hüllmaterialtransport beeinflussen, insbesondere kann mittels dieser Vorsprünge aber Material aus dem Pressraum in diesen zurückgedrängt werden, welches beispielsweise durch den Pressraum begrenzende Riemen aus diesem herausgeführt wird.

Übersteigt die Breite zumindest die der ersten Rolle oder aber die Breite beider Rollen und/oder des Förderelements die Breite des Pressraums so können entsprechende Lager außerhalb des Pressraums angeordnet werden bzw. in diesen möglichst wenig hineinragen. Auf diese Weise kann eine Interaktion bzw. Behinderung des Gutflusses minimiert werden.

Es ist denkbar, dass das Förderelement Stäbe oder andere geeignete Bauteile umschlingt. Vorzugsweise umschlingt es aber wenigstens eine, vorzugsweise aber zwei Rollen, von denen wenigstens eine drehbar vorgesehen ist, so dass ein möglichst gleichmäßiges Umlaufverhalten des Förderelements unterstützt wird. Es kann auch vorgesehen sein, dass die Rolle(n) mehrteilig ausgebildet ist/sind oder mehrere Rollen/Walzen auf einer gemeinsamen Achse angeordnet sind.

Bei wenigstens einer der Rollen kann es sich um ein Element zur Ballenbildung handeln, welches beispielsweise direkt auf den zu bildenden Ballen wirkt oder das mit einem weiteren Ballenbildungselement zusammenwirkt, beispielsweise indem es von einem auf den Ballen wirkenden Riemen umschlungen wird.

Es ist denkbar, einen Antrieb vorzusehen, der unabhängig von den Rollen auf das Förderelement wirkt, um dieses anzutreiben. Es kann beispielsweise eine weitere Rolle vorgesehen sein, die auf eine Außenseite des Förderelements wirkt. Ist aber wenigstens eine der Rollen in der Art antreibbar, dass das Förderelement umlaufend angetrieben werden kann, so muss kein weiterer Bauteil vorgesehen werden. Darüber hinaus ist eine derartige Rolle weitestgehend vor Verschmutzungen geschützt, da sie von dem Förderelement umschlungen wird und somit im Inneren des Förderelements bzw. geschützt angeordnet ist, so dass ein möglichst störungsfreier Antrieb des Förderelements unterstützt wird; dies insbesondere, wenn das Förderelement einteilig bzw. in der Art eines einteiligen Riemens ausgebildet ist. Es kann vorgesehen sein, dass die Rolle dauerhaft angetrieben wird. Auf diese Weise können Verunreinigungen fortlaufend in Richtung des Ballens transportiert werden und sammeln sich nicht auf dem Förderelement an. Ein selektiver Antrieb, der beispielsweise nur dann wirksam mit dem Förderelement verbunden ist, wenn tatsächlich Hüllbahn an den Ballen herangeführt werden soll, ist alternativ möglich.

Ein besonders gleichmäßiger Umlauf bzw. Antrieb des Förderelements kann erzielt werden, wenn die Rolle(n) bzw. insbesondere die oder eine der angetriebene(n) Rolle(n) einen Belag hohen Reibwerts aufweist/aufweisen.

Vorzugsweise weist die Vorrichtung wenigstens ein Fördermittel auf, die die Hüllbahn von einem Vorrat, beispielsweise in der Art einer Rolle, abziehen, so dass die Hüllbahn zu dem umlaufenden Förderelement gelangen kann, um an den Ballen herangeführt zu werden.

Es kann vorgesehen sein, dass die Hüllbahn nach Beendigung des Hüllvorgangs abreißt, beispielsweise indem der Ballen weiterrotiert und die Zufuhr von Hüllbahn von dem Vorrat unterbrochen wird. Um einer ungleichmäßigen Abrisskante und somit einem Verknäulen der Hüllbahn entgegenzuwirken, kann eine Trenneinrichtung vorgesehen sein, welche beispielsweise ein Messer aufweist, welche die Hüllbahn schneidet oder abtrennt. Diese Trenneinrichtung kann mit einer Leiteinrichtung, die beispielsweise die Hüllbahn an das Förderelement heranbringt, in der Art zusammenwirken, dass diese als Unterlage oder Lagesicherung für die Hüllbahn dient.

Die Ballenpresse weist vorzugsweise eine Pressgutzufuhreinrichtung auf, die vorzugsweise als ein insbesondere Mitnehmer aufweisender Förderrotor ausgebildet ist bzw. einen solchen umfasst, um das Pressgut in den Pressraum hineinzufördern.

Ist die Pressgutzufuhreinrichtung zumindest im Wesentlichen unterhalb des Förderelements angeordnet, so kann das Förderelement Material, beispielsweise in der Art von Verschmutzungen, zerkleinertem Pressgut etc. von der Pressgutzufuhreinrichtung fernhalten, wodurch einem Verstopfen der Pressgutzufuhreinrichtung vorgebeugt werden kann.

Wirkt die Pressgutzufuhreinrichtung mit einer Schneideinrichtung zusammen, so wird das durch die Pressgutzufuhreinrichtung geförderte Pressgut durch die Schneideinrichtung weiter zerkleinert, wodurch ein gleichmäßigerer Ballen gebildet wird. Die Pressgutzufuhreinrichtung und die Schneideinrichtung sind vorzugsweise in einem Zufuhrkanal der Ballenpresse angeordnet, durch den das durch eine Aufnahmeeinrichtung aufgenommene Pressgut in einen Pressraum der Ballenpresse gelangt, in dem der Ballen gebildet und im Anschluss umhüllt wird.

Die Pressgutzufuhreinrichtung kann in einfacher Art und Weise an den den Ballen aufnehmenden Pressraum der Ballenpresse angrenzend vorgesehen sein; es ist aber auch denkbar, dass zwischen der Pressgutzufuhreinrichtung und dem Pressraum weitere Fördereinrichtungen, auch in der Art einer Starterwalze bzw. in der Art von Riemen etc. versehen sind, welche zur Ballenbildung beitragen oder auch von dieser unabhängig vorgesehen sein können.

Die Pressgutzufuhreinrichtung kann einer Aufnahmeeinrichtung der Ballenpresse nachgeordnet sein, welche zu pressendes Material beispielsweise vom Untergrund aufnimmt. Bei einer derartigen Aufnahmeeinrichtung kann es sich beispielsweise um eine konventionelle Pick-Up handeln. Es ist aber auch denkbar, dass diese in anderer Art und Weise, beispielsweise in der Art eines Förderbandes, ausgebildet ist.

Die Pressgutzufuhreinrichtung bzw. der Förderrotor kann oberschlächtig oder auch unterschlächtig fördern. Bei einer oberschlächtigen Förderung erfolgt die Zufuhr der Hüllbahn vorzugsweise von oben. Eine Vorrichtung zum Umhüllen eines Ballens kann in der Industrie an Ballenpressen Verwendung finden, welche Ballen aus Papier, Abfällen, textilen Materialien etc. bilden. Besonders geeignet ist eine solche Vorrichtung aber zur Verwendung an einer landwirtschaftlichen Ballenpresse für Ballen aus landwirtschaftlichen Erntegütern, die üblicherweise an ein Zugfahrzeug angehängt sind, und insbesondere an Rundballen-pressen, da diese einfach im Aufbau und sicher in der Funktion sein müssen, um im Ernteeinsatz zu bestehen.

In der Zeichnung wird nachfolgend ein Ausführungsbeispiel der vorliegenden Erfindung dargestellt.

In der Zeichnung ist ein nachfolgend näher beschriebenes Ausführungsbeispiel der Erfindung dargestellt. Es zeigt:
Fig. 1 eine schematische Darstellung einer Ballenpresse mit einer Vorrichtung zum Umhüllen eines Ballens mit einer Hüllbahn,
Fig. 2 eine ausschnittsweise Ansicht des Pressraums im Bereich eines Förderelements und
Fig. 3 das Förderelement und einen Teil des Pressraums.

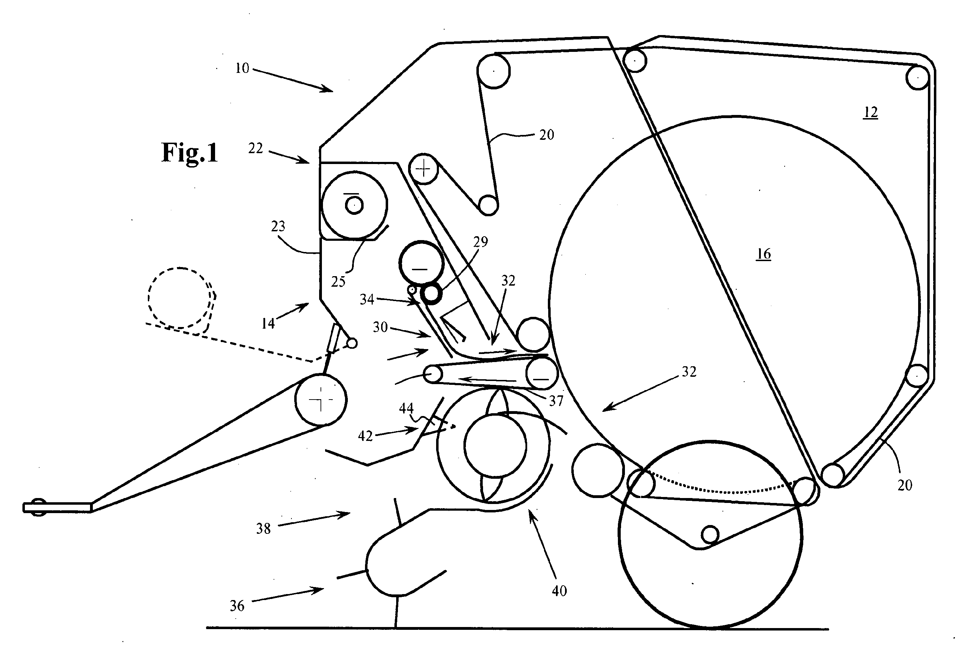

Figur 1 zeigt eine Ballenpresse 10 von im Wesentlichen herkömmlicher Bauart mit einem Pressraum 12. Entsprechend den vorliegenden Ausführungsbeispielen ist darüber hinaus eine Vorrichtung 14 zum Umwickeln eines in dem Pressraum 12 gebildeten Ballens 16 mit einer Hüllbahn 18 vorgesehen.

Bei der Ballenpresse 10 kann es sich um eine bekannte Bauart handeln, d.h. mit einem Pressraum 12 konstanter oder variabler Größe, der von Walzen, von Ketten oder einer Kombination von Riemen und Ketten oder wie in dem Ausführungsbeispiel von Riemen 20 umgeben ist.

Eine derartige Ballenpresse 10 kann in der Landwirtschaft zum Bilden von Ballen 16 aus Erntegut, wie z.B. Stroh, Heu oder Gras eingesetzt werden. Es ist aber auch eine Verwendung in industriellen Bereichen denkbar.

Die Vorrichtung 14 ist in der vorliegenden Ausführungsform an der Vorderseite der Ballenpresse 10 vorgesehen. Die Hüllbahn 18 wird durch einen Spalt hindurch dem Pressraum 12 zugeführt, wo sie von dem in Drehung versetzten Ballen 16 mitgenommen wird. Die Vorrichtung 14 kann aber auch in einem mittleren Bereich der Ballenpresse 10 oder auch vor oder oberhalb des Pressraums 12 angeordnet sein.

Mittels der Hüllbahn 18 wird der Ballen 16 gebunden und somit daran gehindert, nach einem Verlassen der Ballenpresse 10 auseinanderzufallen. Bei der Hüllbahn 18 kann es sich um Folie, Netz, Gewebe, Papier oder dergleichen handeln.

Die Vorrichtung 14 weist ein Gehäuse 22, Mittel 24, welche die Hüllbahn 18 dem Ballen 16 zuführen, und eine Trenneinrichtung 26 auf. In dem Gehäuse 22 ist die Hüllbahn 18 als Rolle 28 bzw. Vorrat gelagert. Das Gehäuse 22 kann auch derart ausgebildet sein, dass es mehrere Rollen 28 bevorratet und/oder Stufen oder Mulden zu deren Lagesicherung aufweist. Im vorliegenden Ausführungsbeispiel weist das Gehäuse 22 eine schwenkbar mit dem übrigen Gehäuse 22 verbundene Klappe 23 auf, durch welche das Gehäuse 22 verschlossen werden kann. Die Klappe 23 ist mit einem Zwischenboden 25 versehen, welcher derart ausgebildet ist, dass er eine Auflage für eine weitere Rolle 28, welche als Vorrat in der Ballenpresse 10 mitgeführt werden kann, bildet. Die Klappe 23 kann manuell oder auch automatisch bzw. motorisiert, beispielsweise unter Zuhilfenahme eines Hydraulikzylinders, beispielsweise in Form eines Motors oder auch eines Dämpfers, in eine geöffnete Stellung gebracht werden, in der die Rolle 28 bequem durch eine Bedienungsperson entnommen bzw. geladen werden kann.

Die Mittel weisen ein Vortriebselement bzw. Fördermittel 29 in der Art einer Walze auf, die ihrer Umfangsfläche mit einem Belag hohen Reibwerts versehen ist und können in Drehung versetzt werden. Die Drehung hilft anfänglich, die Hüllbahn 18 von der Rolle 28 abzuziehen und während des Umhüllungsvorgangs infolge einer gebremsten Drehbewegung in ihr eine Spannung aufzubauen. Die Rolle 28 kommt in ihrer Betriebsstellung mit einem Bereich, der etwa einer 4 bis 6 Uhr Stellung entspricht, an den Fördermitteln 29 zur Anlage.

Darüber hinaus weist die Vorrichtung 14 eine Leiteinrichtung 30 auf, welche die Hüllbahn 18 an eine Fördereinrichtung 32 heranbringt, welches die Hüllbahn 18 in Richtung des Ballen 16 fördert.

Die Leiteinrichtung 30 ist in der Art eines flachen, sich zumindest über die gesamte Breite der Hüllbahn 18 erstreckenden, in Seitenbereichen geschlossenen Schachts oder Kanals 34 ausgebildet, welcher bis annähernd an die Fördereinrichtung 32 heranreicht. Alternativ könnte auch nur unterhalb der Hüllbahn 18 eine Leiteinrichtung, beispielsweise in der Art eines Leitbleches vorgesehen sein. Es ist aber auch denkbar, dass die Hüllbahn 18 allein durch die Wirkung ihrer Gewichtskraft an die Fördereinrichtung 32 herangelangt.

An dem Kanal 34 können ein oder mehrere Gebläse vorgesehen sein, welche in den Kanal 34 Luft direkt oder über Rohre bzw. Leitungen einblasen, um die Hüllbahn 18 in Richtung des Ballens 16 zu fördern oder auch um einen Anhaften der Hüllbahn 18 an dem Kanal 34 entgegenzuwirken, insbesondere wenn die Hüllbahn 18 mit einem Klebstoff beschichtet oder selbstklebend bzw. adhäsiv ausgebildet ist, indem sie in dem Kanal 34 ein Luftpolster erzeugen, auf dem die Hüllbahn 18 schwebt.

Die Fördereinrichtung 32 weist zwei beabstandete Rollen 33, 35 auf, von denen eine erste Rolle 33 an den Pressraum 12 angrenzend und die andere Rolle 35 von dem Pressraum 12 beabstandet im Wesentlichen unterhalb der Leiteinrichtung 30 vorgesehen ist. Die beiden Rollen 33, 35 werden von einem umlaufenden Förderelement 37 in der Art eines Riemens umschlungen. Um das Förderelement 37 in Bewegung zu versetzen, ist wenigstens eine der Rollen 33, 35, vorzugsweise die dem Pressraum 12 benachbart angeordnete Rolle 35, antreibbar vorgesehen. Eine möglichst gleichmäßige Bewegung des Förderelements 37 kann erzielt werden, wenn die entsprechende Rolle 35 mit einem Belag hohen Reibwerts versehen sein. Um einem Verstopfen und/oder einem Ausfasern der Hüllbahn 18 entgegenzuwirken kann/können eine oder mehrere Leitvorrichtung(en), beispielsweise in der Art eines oder mehrerer Leitbleche vorgesehen sein, die einem Kontakt zwischen den Rollen und der Hüllbahn entgegenwirkt/entgegenwirken.

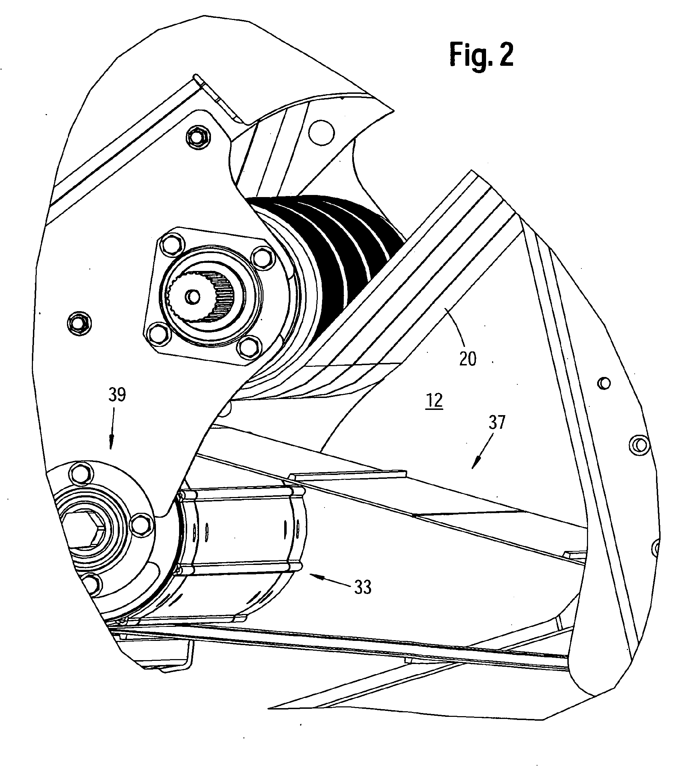

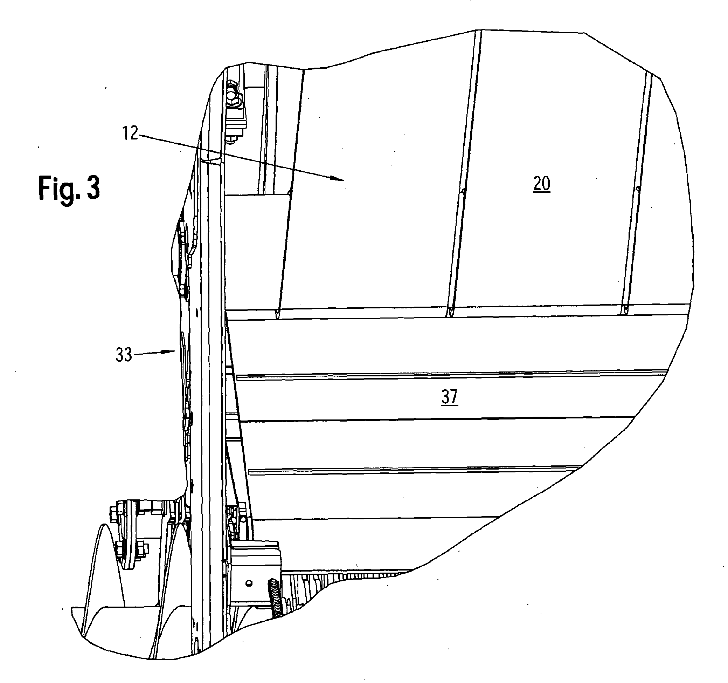

Es wird nun auch auf Figur 2 Bezug genommen, aus welcher hervorgeht, dass der Pressraum 12 im Bereich der Rolle 33, 35 derart ausgebildet ist, dass Halterungen 39 zur Lagerung der Rollen 33, 35 vorgesehen sind, der Bereich seitwärts im Übrigen aber vollständig offen ist, so dass die Rollen 33, 35 insbesondere zum Entfernen von Verunreinigungen bzw. sich ansammelndem Material und/oder zu Wartungszwecken leicht zugänglich sind. Die Rollen 33, 35 sowie das Förderelement 37 weisen darüber hinaus eine Breite auf, die die Breite des Pressraums 12 übersteigt, so dass ihre Endbereiche aus dem Pressraum 12 hinausragen (siehe Figur 3).

Neben dieser Vorrichtung 14 weist die Ballenpresse 10 eine Aufnahmeeinrichtung 36 in der Art einer konventionellen Pick-up auf, welche geschnittenes Erntegut vom Boden aufnimmt und in einen Zufuhrkanal 38 einbringt. In dem Zufuhrkanal 38 ist ein Förderrotor mit Mitnehmern bzw. eine Pressgutzufuhreinrichtung 40 vorgesehen, welcher das von der Aufnahmeeinrichtung 36 zugeführte Erntegut in den Pressraum 12 einbringt.

Die Pressgutzufuhreinrichtung 40 wirkt darüber hinaus in bekannter Art und Weise mit einer Schneideinrichtung 42 zusammen, welche in dem Zufuhrkanal 38 oberhalb der Pressgutzufuhreinrichtung 40 vorgesehen ist, die aber auch unterhalb der Pressgutzufuhreinrichtung 40 bzw. anderweitig positioniert sein kann. Die Schneideinrichtung 42 weist eine Mehrzahl von Messern 44 auf, welche in den Förderbereich der Pressgutzufuhreinrichtung 40 hineinragen, um das Erntegut weiter zu zerkleinern.

Im Folgenden soll die Funktionsweise der Ballenpresse 10 bzw. der Vorrichtung 14 kurz zusammengefasst werden.

Mittels der Aufnahmevorrichtung 36 wird über den Zufuhrkanal 38 und die Pressgutzufuhreinrichtung 40 Erntegut in den Pressraum 12 der Ballenpresse 10 eingebracht, wo es durch die Riemen 20 in konventioneller Art und Weise zu einem Ballen 16 verdichtet wird. Nach dem Abschluss der Ballenbildung, wobei dieser Zeitpunkt beispielsweise durch einen oder mehrere die Ballengröße ermittelnde Sensoren, eine Zeitsteuerung, eine Durchflussmengenbestimmung etc. ermittelt werden kann, wird die Vorrichtung 14 aktiviert, um den Ballen 16 mit Hüllmaterial 18 zu umhüllen. Diese Aktivierung kann beispielsweise mittels einer nicht gezeigten Steuer- bzw. Regeleinheit, welche an der Ballenpresse 10 selbst oder an einem nicht gezeigten Zugfahrzeug, wie einem Ackerschlepper, vorgesehen sein kann, erfolgen. Um den Hüllvorgang zu beginnen, wird das Fördermittel 29 in Rotation versetzt, um Hüllmaterial von der Rolle 28 abzuziehen. Das Hüllmaterial 18 gelangt in den Kanal 34 und wird durch die Wirkung der Fördermittel 29 und falls vorhanden durch die oben beschriebene Gebläsewirkung in Richtung der Fördereinrichtung 32 verbracht. Die Hüllbahn 18 tritt aus dem Kanal 34 derart aus, dass sie zumindest im Wesentlichen von oben im Bereich der dem Pressraum abgewandt angeordneten Rolle 35 auf das Förderelement 37 auftrifft und auf seiner Oberseite in Richtung des Pressraums 12 gefördert wird, wo sie durch den rotierenden Ballen 16 ergriffen wird und diesen einhüllt.

Ist der Umhüllungsvorgang des Ballens 16 abgeschlossen, was durch konventionelle Sensoren oder auch eine Zeitsteuerung etc. bestimmt werden kann, wird die Hüllbahn 18 mittels einer an dem Kanal 34 schwenkbar angebrachten Trenneinrichtung 26 durchtrennt. Im Anschluss wird der fertige Ballen 16 aus der Ballenpresse 10 ausgestoßen.

## Patentansprüche

1. Ballenpresse (10) mit einem Pressraum (12) sowie einer Vorrichtung (14) zum Umhüllen eines Ballens (16) mit einer Hüllbahn (18) mit wenigstens einem umlaufenden Förderelement (37), das die Hüllbahn (18) direkt an den Ballen (16) heranführt und das wenigstens zwei Rollen (33, 35) umschlingt, **dadurch gekennzeichnet, dass** der Pressraum (12) zumindest im Bereich des Förderelements(37) seitwärts im Wesentlichen geöffnet ausgebildet ist.

2. Ballenpresse nach Anspruch 1, **dadurch gekennzeichnet, dass** das Förderelement (37) wenigstens einen umlaufenden Riemen aufweist bzw. als ein solcher ausgebildet ist.

3. Ballenpresse nach Anspruch 1 oder 2, **dadurch gekennzeichnet, dass** das Förderelement (37) einteilig ausgebildet ist.

4. Ballenpresse nach einem oder mehreren der vorherigen Ansprüche, **dadurch gekennzeichnet, dass** das Förderelement (37) auf seiner Umfangsfläche mit Vorsprüngen versehen ist.

5. Ballenpresse nach einem oder mehreren der vorherigen Ansprüche, **dadurch gekennzeichnet, dass** die Breite zumindest der ersten Rolle (33), vorzugsweise aber die Breite beider Rollen (33, 35) und/oder die Breite des Förderelements (37) die Breite des Pressraums (12) übersteigt

6. Ballenpresse nach einem oder mehreren der vorherigen Ansprüche, **dadurch gekennzeichnet, dass** wenigstens eine der Rollen (33, 35) drehbar vorgesehen ist

7. Ballenpresse nach einem oder mehreren der vorherigen Ansprüche , **dadurch gekennzeichnet, dass** es sich bei der Rolle (33, 35) bzw. bei wenigstens einer der Rollen (33, 35) um ein Element zur Ballenbildung handelt.

8. Ballenpresse nach einem oder mehreren der vorherigen Ansprüche, **dadurch gekennzeichnet, dass** wenigstens eine der Rollen (33, 35), vorzugsweise selektiv, in der Art antreibbar ist, dass das Förderelement (37) umlaufend angetrieben werden kann.

9. Ballenpresse nach einem oder mehreren der vorherigen Ansprüche, **dadurch gekennzeichnet, dass** die Rolle(n) (33, 35) einen Belag hohen Reibwerts aufweist/aufweisen.

10. Ballenpresse nach einem oder mehreren der vorherigen Ansprüche, **gekennzeichnet durch** wenigstens ein Fördermittel (29), das die Hüllbahn (18) von einem Vorrat, beispielsweise in der Art einer Rolle (28), abzieht.

11. Ballenpresse nach einem oder mehreren der vorherigen Ansprüche, **gekennzeichnet durch** eine Trenneinrichtung (26), welche vorzugsweise mit einer Leiteinrichtung (30) zusammenwirkt .

12. Ballenpresse nach einem oder mehreren der vorherigen Ansprüche, **gekennzeichnet durch** eine Pressgutzufuhreinrichtung (40), die vorzugsweise als ein insbesondere Mitnehmer aufweisender Förderrotor ausgebildet ist bzw. einen solchen umfasst.

13. Ballenpresse nach Anspruch 12, **dadurch gekennzeichnet, dass** die Pressgutzufuhreinrichtung (40) zumindest im Wesentlichen unterhalb des Förderelements (37) angeordnet ist.

14. Ballenpresse nach Ansprüch 12 oder 13, **dadurch gekennzeichnet, dass** die Pressgutzufuhreinrichtung (40) mit einer Schneideinrichtung (42) zusammenwirkt.

15. Ballenpresse nach einem oder mehreren der Ansprüche 12 bis 14, **dadurch gekennzeichnet, dass** die Pressgutzufuhreinrichtung (40) an den Pressraum (12) angrenzend angeordnet ist.

16. Ballenpresse nach einem oder mehreren der Ansprüche 12 bis 15, **dadurch gekennzeichnet, dass** die Pressgutzufuhreinrichtung (40) einer Aufnahmeeinrichtung (38) der Ballenpresse (10) nachgeordnet ist.

17. Ballenpresse nach einem oder mehreren der vorherigen Ansprüche, **dadurch gekennzeichnet, dass** die Pressgutzufuhreinrichtung (40) ober- bzw. ünterschlächtig fördert.

18. Ballenpresse nach einem oder mehreren der vorherigen Ansprüche ausgebildet in der Art einer Rundballenpresse

## Claims

1. Baling press (10) having a pressing chamber (12) and an apparatus (14) for wrapping a bale (16) in a wrapping web (18) having at least one rotating conveyor element (37), which delivers the wrapping web (18) directly to the bale (16) and loops around the at least two rollers (33, 35), **characterized in that** the pressing chamber (12) is configured such that it is substantially open to the side, at least in the region of the conveyor element (37).

2. Baling press according to Claim 1, **characterized in that** the conveyor element (37) has at least one rotating belt or can be configured as such.

3. Baling press according to Claim 1 or 2, **characterized in that** the conveyor element (37) is configured in one piece.

4. Baling press according to one or more of the previous claims, **characterized in that** the conveyor element (37) is provided with projections on its peripheral face.

5. Baling press according to one or more of the previous claims, **characterized in that** the width at least of the first roller (33), preferably, however, the width of both rollers (33, 35), and/or the width of the conveyor element (37), exceeds the width of the pressing chamber (12).

6. Baling press according to one or more of the previous claims, **characterized in that** at least one of the rollers (33, 35) is arranged such that it is rotatable.

7. Baling press according to one or more of the previous claims, **characterized in that** the roller (33, 35) or at least one of the rollers (33, 35) is/are constituted by a baling element.

8. Baling press according to one or more of the previous claims, **characterized in that** at least one of the rollers (33, 35), preferably selectively, can be driven in such a way that the conveyor element (37) can be rotatingly driven.

9. Baling press according to one or more of the previous claims, **characterized in that** the roller(s) (33, 35) has/have a high-friction coating.

10. Baling press according to one or more of the previous claims, **characterized by** at least one conveyor means (29) which draws off the wrapping web (18) from a store, for example in the form of a roll (28).

11. Baling press according to one or more of the previous claims, **characterized by** a cutting device (26), which preferably cooperates with a guide device (30).

12. Baling press according to one or more of the previous claims, **characterized by** a pressing material feeder (40), which is preferably configured as or comprises a conveyor rotor having, in particular, dogs.

13. Baling press according to Claim 12, **characterized in that** the pressing material feeder (40) is disposed at least essentially beneath the conveyor element (37).

14. Baling press according to Claim 12 or 13, **characterized in that** the pressing material feeder (40) cooperates with a cutting device (42).

15. Baling press according to one or more of Claims 12 to 14, **characterized in that** the pressing material feeder (40) is disposed adjacent to the pressing chamber (12).

16. Baling press according to one or more of Claims 12 to 15, **characterized in that** the pressing material feeder (40) is disposed downstream of a receiving device (38) of the baling press (10).

17. Baling press according to one or more of the previous claims, **characterized in that** the pressing material feeder (40) conveys in an overshot or undershot manner.

18. Baling press according to one or more of the previous claims, configured in the form of a round baler.

## Revendications

1. Presse à balles (10) comprenant un espace de presse (12) ainsi qu'un dispositif (14) pour envelopper une balle (16) avec une bande d'enveloppement (18) comprenant au moins un élément de transport en rotation (37) qui amène la bande d'enveloppement (18) directement sur les balles (16) et qui entoure au moins deux rouleaux (33, 35), **caractérisée en ce que** l'espace de presse (12) est réalisé de manière sensiblement ouverte vers le côté au moins dans la région de l'élément de transport (37).

2. Presse à balles selon la revendication 1, **caractérisée en ce que** l'élément de transport (37) présente au moins une courroie périphérique ou est réalisé en tant que telle.

3. Presse à balles selon la revendication 1 ou 2, **caractérisée en ce que** l'élément de transport (37) est réalisé d'une seule pièce.

4. Presse à balles selon l'une quelconque ou plusieurs des revendications précédentes, **caractérisée en ce que** l'élément de transport (37) est pourvu de saillies sur sa surface périphérique.

5. Presse à balles selon l'une quelconque ou plusieurs des revendications précédentes, **caractérisée en ce que** la largeur d'au moins le premier rouleau (33), mais de préférence la largeur des deux rouleaux (33, 35) et/ou la largeur de l'élément de transport (37) sont supérieures à la largeur de l'espace de presse (12).

6. Presse à balles selon l'une quelconque ou plusieurs des revendications précédentes, **caractérisée en ce qu'**au moins l'un des rouleaux (33, 35) est rotatif.

7. Presse à balles selon l'une quelconque ou plusieurs des revendications précédentes, **caractérisée en ce que** le rouleau (33, 35) ou au moins l'un des rouleaux (33, 35) est un élément servant à former les balles.

8. Presse à balles selon l'une quelconque ou plusieurs des revendications précédentes, **caractérisée en ce qu'**au moins l'un des rouleaux (33, 35) peut être entraîné, de préférence de manière sélective, de telle sorte que l'élément de transport (37) puisse être entraîné en rotation.

9. Presse à balles selon l'une quelconque ou plusieurs des revendications précédentes, **caractérisée en ce que** le ou les rouleaux (33, 35) présentent un revêtement de haut coefficient de frottement.

10. Presse à balles selon l'une quelconque ou plusieurs des revendications précédentes, **caractérisée par** au moins un moyen de transport (29) qui tire la bande d'enveloppement (18) depuis une réserve, par exemple à la manière d'un rouleau (28).

11. Presse à balles selon l'une quelconque ou plusieurs des revendications précédentes, **caractérisée par** un dispositif de sectionnement (26) qui coopère de préférence avec un dispositif de guidage (30).

12. Presse à balles selon l'une quelconque ou plusieurs des revendications précédentes, **caractérisée par** un dispositif d'apport de matière à presser (40), qui est réalisé de préférence sous forme d'un rotor de transport présentant notamment des dispositifs d'entraînement, ou qui comprend un tel dispositif d'apport.

13. Presse à balles selon la revendication 12, **caractérisée en ce que** le dispositif d'apport de matière à presser (40) est disposé au moins substantiellement en dessous de l'élément de transport (37).

14. Presse à balles selon la revendication 12 ou 13, **caractérisée en ce que** le dispositif d'apport de matière à presser (40) coopère avec un dispositif de coupe (42).

15. Presse à balles selon l'une quelconque ou plusieurs des revendications 12 à 14, **caractérisée en ce que** le dispositif d'apport de matière à presser (40) est disposé à côté de l'espace de presse (12).

16. Presse à balles selon l'une quelconque ou plusieurs des revendications 12 à 15, **caractérisée en ce que** le dispositif d'apport de matière à presser (40) est disposé en aval d'un dispositif de réception (38) de la presse à balles (10).

17. Presse à balles selon l'une quelconque ou plusieurs des revendications précédentes, **caractérisée en ce que** le dispositif d'apport de matière à presser (40) transporte la matière par le dessus ou par le dessous.

18. Presse à balles selon l'une quelconque ou plusieurs des revendications précédentes, réalisée à la manière d'une presse à balles rondes.
